# EUROPEAN PATENT SPECIFICATION

(11) **EP 2 562 065 B1**
(45) Date of publication and mention of the grant of the patent: **17.10.2018**
(21) Application number: 10850018.2
(22) Date of filing: 24.05.2010
(51) Int. Cl.: B62D 25/02, B62D 23/00, B62D 25/08, B60K 1/04, B62D 31/00

(54) **INTEGRAL BODY OF ULTRA-MICRO PURE ELECTRIC VEHICLE AT LOW SPEED**
EINTEILIGER FAHRZEUGAUFBAU EINES ULTRAMIKROREINEN ELEKTROFAHRZEUGES MIT NIEDRIGER GESCHWINDIGKEIT
CARROSSERIE D'UNE SEULE PIÈCE D'ULTRAMICRO-VÉHICULE PUREMENT ÉLECTRIQUE À FAIBLE VITESSE

(30) Priority: 19.04.2010 CN 201020163909 U
(43) Date of publication of application: 27.02.2013
(73) Proprietor: Bao, Wenguang, Economic Development Zone Huangyan Taizhou Zhejiang 318020 (CN)
(72) Inventor: Bao, Wenguang, Economic Development Zone Huangyan Taizhou Zhejiang 318020 (CN)
(74) Representative: Rutz, Andrea
(86) International application number: PCT/CN2010/000733
(87) International publication number: WO 2011/130884

(56) References cited:
- EP-A1- 0 854 818
- EP-A1- 1 077 865
- WO-A1-2009/077548
- WO-A2-2010/081997
- CN-A- 1 136 794
- CN-A- 101 323 320
- CN-Y- 2 587 741
- CN-Y- 201 183 525
- DE-A1- 3 706 700
- DE-A1- 4 243 186
- DE-A1-102004 029 740
- GB-A- 1 274 643
- JP-A- S5 940 977
- JP-A- S6 432 982
- JP-A- 2006 182 295

## Description

### FIELD OF THE INVENTION

The present application relates to a technical field of vehicle body structure, and particularly to an integral body of an ultra-mini low-speed pure electric vehicle.

### BACKGROUND OF THE INVENTION

In recent years, in view of problems of energy shortage and environmental deterioration, ultra-miniaturization and low emission has become a new development trend in the world conventional vehicle industry and has made great progress. With the continuous improvement of the rechargeable technology and the electric motor technology, electrical vehicles are receiving more and more attention.

At present, a vehicle body structure of an ultra-mini vehicle mainly has two forms, that is, a body-in-white being formed by connecting or welding body outer covering parts with stamping structural parts, and an integral vehicle body formed by fiber reinforced plastics. The former form has substantially same structure with the existing vehicle, however the design strength thereof can not reach the level required for the passenger cars due to the influence of the body dimension and the safety is far worse than the conventional passenger cars. The latter form is mainly used in small batch production. A compact-sized motor vehicle for urban use is for example disclosed in WO 2009/077548.

There are mainly three problems of the vehicle body structure design for an ultra-mini pure electric vehicle, that is, dimension limitation, inner space limitation and total weight limitation. The above three factors are interacted with each other. The outline dimension of the ultra-mini vehicle is far smaller than that of a common family vehicle. Therefore, it is difficult to ensure structural strength, stiffness and dynamic performance of the vehicle body, and at the same time ensure the coordination of arrangement position and axle load distribution of each functional component (such as a battery, or a seat) and a light weight for increasing mileage.

### SUMMARY OF THE INVENTION

In view of the problems in the prior art, an object of the present application is to provide a vehicle body structure of light weight, which not only can ensure a lighter weight, a better static and dynamic performances of the vehicle structure, but also can ensure effectively utilization of the limited space within the vehicle body, so as to provide installation bases for various chassis parts, batteries, electric motors, controllers, interior trim parts and etc.. This object is solved by the provision of an integral body for an ultra-mini low-speed pure electric vehicle as claimed in claim 1 and as described in particular in the following paragraphs [0006] to [0008]. Further embodiments of the integral body are provided in dependent claims 2 to 5, as well as in the following paragraphs [0009] to [0014].

An integral body for an ultra-mini low-speed pure electric vehicle according to present application, includes an underframe assembly, a front motor compartment assembly being fixedly provided on a front end of the underframe assembly, a side panel assembly including an outer side panel and an inner side panel and being fixedly connected to a rear end of the front motor compartment assembly, and a roof assembly being fixedly connected to a top portion of the side panel assembly.

In the integral body for an ultra-mini low-speed pure electric vehicle, the underframe assembly includes two parallel front longitudinal beams, two parallel rear longitudinal beams, and a bottom plate including a front bottom plate and a rear bottom plate and being provided on the two front longitudinal beams and the two rear longitudinal beams; U-shaped battery boxes are provided between the two front longitudinal beams and the two rear longitudinal beams; a first transverse beam is fixedly connected to front ends of the two front longitudinal beams, a second transverse beam and a third transverse beam are fixedly provided between the two front longitudinal beams at positions between the first transverse beam and the battery boxes, a fourth transverse beam and a fifth transverse beam are fixedly provided between the two longitudinal beams; a first side transverse beam is extended from one side of each of the two front longitudinal beams, a second side transverse beam is extended from one side of each of the battery boxes, a third side transverse beam is extended from one side of each of the two rear longitudinal beams, and the first side transverse beam, the second side transverse beam and the third side transverse beam are fixedly connected to a door sill beam at a bottom portion of the side panel assembly.

In the integral body for an ultra-mini low-speed pure electric vehicle, each of the two rear longitudinal beams is a stepped beam and is provided with a support seat connected to a rear axle longitudinal thrust rod, the rear bottom plate of a stepped structure is fixedly provided on the two rear longitudinal beams, a cavity for placing a controller box is formed by the rear bottom plate and a steel plate provided at a base portion of the battery boxes, and a central beam is provided between the battery boxes and the front panel of the front motor compartment assembly.

In the integral body for an ultra-mini low-speed pure electric vehicle, each of the two front longitudinal beams is provided, at the front end, with a lower swing arm seat configured to be connected to a front axle lower swing arm, the second transverse beam is fixedly provided with a steering box mounting plate configured to be connected to a front axle steering box, and the fifth transverse beam is of an engine mounting beam structure and is provided with a rear shock absorber seat configured to be connected to a rear axle shock absorber.

In the integral body for an ultra-mini low-speed pure electric vehicle, the front motor compartment assembly includes two symmetrically disposed front pillars, each of the two front pillars is fixedly provided on each of the two front longitudinal beams of the underframe assembly, a front end of each of the two front pillars is connected to a front motor compartment support beam of an arc structure, the other end of the front motor compartment support beam is fixedly connected to a lower windshield transverse beam, the lower windshield transverse beam is provided between two A-pillar lower pillars of the side panel assembly, a front panel is provided between the lower windshield transverse beam and the underframe assembly, a fender is provided between the front panel and each of the two front pillars, and a cavity for placing battery boxes is formed by the two front pillars, the front motor compartment support beam, the lower windshield transverse beam, the front panel and the fender.

In the integral body for an ultra-mini low-speed pure electric vehicle, a front hood lock bracket for fixing a front hood is provided between the two front pillars, a front shock absorber seat side beam is provided between the fender and the front panel and is fixedly provided with a front shock absorber seat.

In the integral body for an ultra-mini low-speed pure electric vehicle, the side panel assembly includes the integral outer side panel, and the inner side panel is provided at an inner side of the outer side panel and is provided with lightening holes and reinforcing ribs.

In the integral body for an ultra-mini low-speed pure electric vehicle, the roof assembly includes a roof cover fixedly connected to a top portion of the side panel assembly via roof support beams.

In the integral body for an ultra-mini low-speed pure electric vehicle, the roof cover is made of an ultra-thin steel plate or composite material and is provided with reinforcing ribs.

Based on the above structure, a firm space of a cage-shaped structure is formed between various plate parts, and the body frames are connected to each other, such that in the case of using thin steel plates, the requirements for strength, stiffness and dynamic performance of the vehicle body may be satisfied.

The integral vehicle body provided by the present application fully considers the arrangement space and installation method for each functional component, and ensures a reasonable load distribution of the front and rear axles, traveling comfort and handling convenience for a driver by reasonably arranging the functional components in the relatively compact space.

### BRIEF DESCRIPTION OF THE DRAWINGS

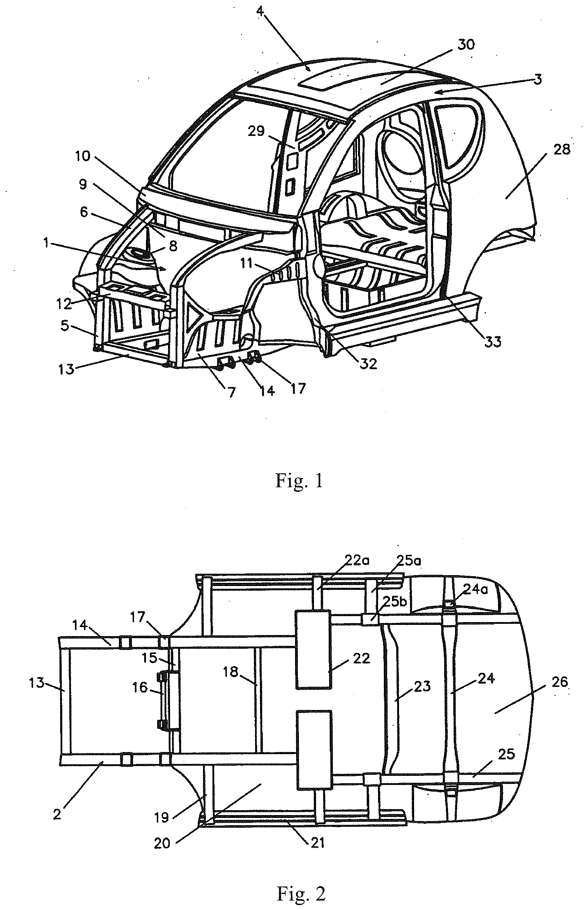

Figure 1 is a schematic view of an overall structure of an embodiment of the present application;
Figure 2 is a schematic view of an underframe assembly;

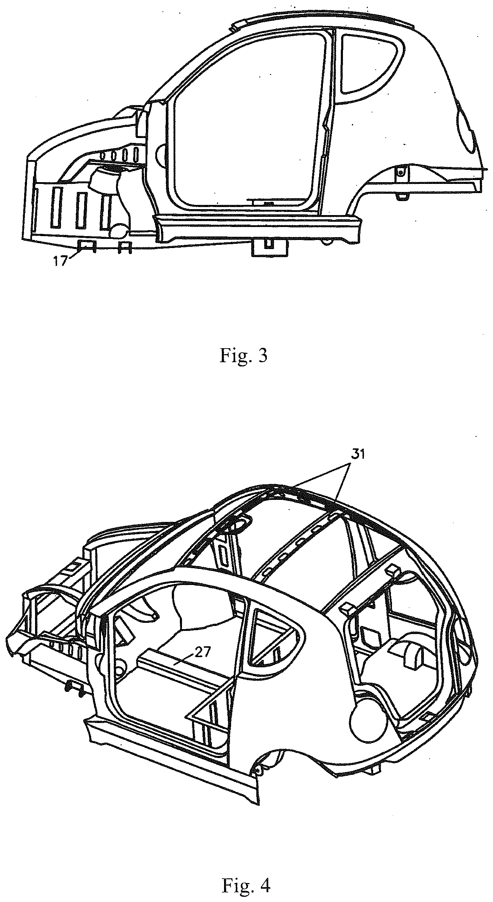

Figure 3 is a side view of the present application; and
Figure 4 is a structural schematic view of the present application with a roof being removed.

### Reference Numerals in the figures:

| | |
|---|---|
| 1-front motor compartment assembly; | 2-underframe assembly; |
| 3-side panel assembly; | 4-roof assembly; |
| 5-front pillar; | 6-front motor compartment support beam; |
| 7-fender; | 8-front shock absorber seat; |
| 9-front panel; | 10-lower windshield transverse beam; |
| 11-front shock absorber seat side beam; | 12-front hood lock bracket; |
| 13-first transverse beam; | 14-front longitudinal beam; |
| 15-second transverse beam; | 16-steering box mounting plate; |
| 17-lower swing arm seat; | 18-third transverse beam; |
| 19-first side transverse beam; | 20-front bottom plate; |
| 21-door sill beam; | 22-battery box; |
| 22a- second side transverse beam; | 23-fourth transverse beam; |
| 24-fifth transverse beam; | 24a-rear shock absorber seat; |
| 25-rear longitudinal beam; | 25a-third side transverse beam; |
| 25b-support seat; | 26-rear bottom plate; |
| 27-central beam; | 28-outer side panel; |
| 29-inner side panel; | 30-roof cover; |
| 31-roof support beam; | 32-A-pillar lower pillar; and |
| 33-B-pillar. | |

### DETAILED DESCRIPTION OF THE INVENTION

The present application is further illustrated in conjunction with the accompanying drawings of the specification.

As shown in the figures, an integral body for an ultra-mini low-speed pure electric vehicle includes an underframe assembly 2, a front motor compartment assembly 1 being fixedly provided on a front end of the underframe assembly 2, a side panel assembly 3 being fixedly connected to a rear side of the front motor compartment assembly 1, and a roof assembly 4 being fixedly connected to a top portion of the side panel assembly 3.

The front motor compartment assembly 1 includes front pillars 5, front motor compartment support beams 6, fenders 7, front shock absorber seats 8, a front panel 9, a lower windshield transverse beam 10, shock absorber seat side beams 11 and a front hood lock bracket 12. Each of the two front pillars 5, symmetrically disposed, is provided at a front end of each of the front longitudinal beams 14. The front hood lock bracket 12 for fixing a front hood is disposed between the two front pillars 5. An upper end of the front pillar 5 is connected to the front motor compartment support beam 6 of an arc structure. The other end of the front motor compartment support beam 6 is welded onto the lower windshield transverse beam 10. The lower windshield transverse beam 10 is disposed between two A-pillar lower pillars 32. The front panel 9 is disposed between the lower windshield transverse beam 10 and a front bottom plate 20 of the underframe assembly 2. The fender 7 is disposed between the front panel 9 and the front pillar 5. The front shock absorber seat side beam 11 is disposed between the fender 7 and the front panel 9, and is fixedly provided with the front shock absorber seat 8. A cavity for placing a battery box is formed by the front pillars 5, the front motor compartment support beams 6, the lower windshield transverse beam 10, the front panel 9 and the fenders 7, which may ensure a better mechanical property.

The underframe assembly 2 includes front longitudinal beams 14, rear longitudinal beams 25, a first transverse beam 13, a second transverse beam 15, a third transverse beam 18, a fourth transverse beam 23, a fifth transverse beam 24, a front bottom plate 20, a rear bottom plate 26 and battery boxes 22. The first transverse beam 13 is fixedly connected to front ends of the two front longitudinal beams 14. The second transverse beam 15 and the third transverse beam 18 are fixedly disposed between the two front longitudinal beams 14 at positions between the first transverse beam 13 and the battery boxes 22, and a steering box mounting plate 16 is welded on the second transverse beam 15. The fourth transverse beam 23 and the fifth transverse beam 24 are fixedly connected between the two rear longitudinal beams 25. The fifth transverse beam 24 has an engine mounting beam structure, and both ends of the fifth transverse beam 24 are welded with a rear shock absorber seat 24a. The rear longitudinal beam 25 is a stepped beam, is provided with a support seat 25b connected to a rear axle longitudinal thrust rod, and is fixedly provided with the rear bottom plate 26 of a stepped structure. The U-shaped battery boxes 22 with reinforcing ribs for placing batteries are formed by stamping the bottom plate under the seats. The front longitudinal beams 14 and the rear longitudinal beams 25 are both connected to the U-shaped battery boxes 22. A three-quarter loop of steel plate is welded around a base portion of the U-shaped battery boxes and extends backwards to the rear bottom plate 26, so as to form a cavity for placing a controller with the back bottom plate 26. A central beam 27 having a rectangular cross section is provided at a middle portion of the front bottom plate 20 and is spot welded with the front bottom plate so as to transmit a force flow and act as a line passage. A first side transverse beam 19 is extended from one side of each of the front longitudinal beams 14 at a position at a lower end of the A-pillar lower pillar 32 of the side panel assembly 3, a second side transverse beam 22a is extended from one side of each of the battery boxes 22, and a third side transverse beam 25a is extended from one side of each of the rear longitudinal beams 25 at a position at a lower end of the B-pillar 33. The first side transverse beam 19, the second side transverse beam 22a and the third side transverse beam 25a are fixedly connected to a door sill beam 21 at a bottom portion of the side panel assembly 3, so as to connect the underframe assembly 2 with the side panel assembly 3.

The side panel assembly 3 includes an integral outer side panel 28 and an inner side panel 29. The inner side panel 29 is provided with lightening holes and reinforcing ribs being topologically optimized, so as to meet requirements for stiffness, strength and modal characteristics of the vehicle body and reduce the weight of the vehicle body.

The roof assembly 4 includes a roof 30 and roof support beams 31. Two ends of each of the roof support beams 31 are respectively fixedly connected to upper longitudinal beams of the side panel assembly 3 to form a firm frame. The roof 30 and the roof support beams 31 are bonded together by a binder of high strength. The roof 30 is made of a thin steel plate or composite material of high strength, and is provided with reinforcing ribs, which achieves the object of reducing weight without sacrificing local dynamic performances.

## Claims

1. An integral body for an ultra-mini low-speed pure electric vehicle, comprising:
an underframe assembly (2),
a front motor compartment assembly (1) being fixedly provided on a front end of the underframe assembly (2),
a side panel assembly (3) comprising an outer side panel (28) and an inner side panel (29) and being fixedly connected to a rear end of the front motor compartment assembly (1), and
a roof assembly (4) being fixedly connected to a top portion of the side panel assembly (3);
wherein the underframe assembly (2) comprises:
two parallel front longitudinal beams (14),
two parallel rear longitudinal beams (25),
a bottom plate comprising a front bottom plate (20) and a rear bottom plate (26) provided respectively on the two front longitudinal beams (14) and the two rear longitudinal beams (25);
U-shaped battery boxes (22) being provided between the two front longitudinal beams (14) and the two rear longitudinal beams (25),
the front longitudinal beams (14) and the rear longitudinal beams (25) being both connected to the U-shaped battery boxes (22);
a first transverse beam (13) being fixedly connected to front ends of the two front longitudinal beams (14),
a second transverse beam (15) and a third transverse beam (18) being fixedly provided between the two front longitudinal beams (14) at positions between the first transverse beam (13) and the battery boxes (22),
a fourth transverse beam (23) and a fifth transverse beam (24) being fixedly connected between the two rear longitudinal beams (25);
two first side transverse beams (19) being extended respectively from one side of each of the two front longitudinal beams (14),
two second side transverse beams (22a) being extended respectively from one side of each of the battery boxes (22),
two third side transverse beams (25a) being extended respectively from one side of each of the two rear longitudinal beams (25), and
wherein the two first side transverse beams (19), the two second side transverse beams (22a) and the two third side transverse beams (25a) are fixedly connected to a respective door sill beam (21) at a bottom portion of the side panel assembly (3); and **characterized in that**
each of the two rear longitudinal beams (25) is a stepped beam and is provided with a support seat (25b) connected to a rear axle longitudinal thrust rod, the rear bottom plate (26) having a stepped structure is fixedly provided on the two rear longitudinal beams (25), a cavity for placing a controller box is formed by the rear bottom plate (26) and a steel plate provided at a base portion of the battery boxes (22), and a central beam (27) is provided between the battery boxes (22) and a front panel (9) of the front motor compartment assembly (1).

2. The integral body for an ultra-mini low-speed pure electric vehicle according to claim 1, wherein the front motor compartment assembly (1) comprises two symmetrically disposed front pillars (5), each of the two front pillars (5) is fixedly provided on each of the two front longitudinal beams (14) of the underframe assembly (2), an upper end of each of the two front pillars (5) is connected to a front motor compartment support beam (6) having an arc shape, the other end of the front motor compartment support beam (6) is fixedly connected to a lower windshield transverse beam (10), the lower windshield transverse beam (10) is provided between two A-pillar lower pillars (32) of the side panel assembly (3), a front panel (9) is provided between the lower windshield transverse beam (10) and the underframe assembly (2), a fender (7) is provided between the front panel (9) and each of the two front pillars (5), and a cavity for placing battery boxes is formed by the two front pillars (5), the front motor compartment support beam (6), the lower windshield transverse beam (10), the front panel (9) and the fender (7).

3. The integral body for an ultra-mini low-speed pure electric vehicle according to claim 2, wherein a front hood lock bracket (12) for fixing a front hood is provided between the two front pillars (5), a front shock absorber seat side beam (11) is provided between the fender (7) and the front panel (9) and is fixedly provided with a front shock absorber seat (8).

4. The integral body for an ultra-mini low-speed pure electric vehicle according to claim 1, wherein the inner side panel (29) is provided at an inner side of the outer side panel (28) and is provided with lightening holes and reinforcing ribs.

5. The integral body for an ultra-mini low-speed pure electric vehicle according to claim 1, wherein the roof assembly (4) comprises a roof cover (30) fixedly connected to a top portion of the side panel assembly (3) via roof support beams (31).

## Patentansprüche

1. Ein integraler Körper für ein ultra-mini reines Elektrofahrzeug mit niedriger Geschwindigkeit, aufweisend:
eine Untergestell-Baugruppe (2);
eine vordere Motorraum-Baugruppe (1), welche fixiert an einem vorderen Ende der Untergestell-Baugruppe (2) vorgesehen ist,
eine Seitenpanel-Baugruppe (3), welche ein äusseres Seitenpanel (28) und ein inneres Seitenpanel (29) aufweist und fix mit einem hinteren Ende der Motorraum-Baugruppe (1) verbunden ist, und
eine Dach-Baugruppe (4), welche fix mit einem oberen Teil der Seitenpanel-Baugruppe (3) verbunden ist;
wobei die Untergestell-Baugruppe (2) aufweist:
zwei parallele vordere Längsträger (14),
zwei parallele hintere Längsträger (25),
eine Bodenplatte, welche eine vordere Bodenplatte (20) und eine hintere Bodenplatte (26) aufweist, die an den zwei vorderen Längsträgern (14) beziehungsweise an den zwei hinteren Längsträgern (25) vorgesehen sind;
U-förmige Batterieboxen (22), welche zwischen den zwei vorderen Längsträgern (14) und den zwei hinteren Längsträgern (25) vorgesehen sind,
wobei die vorderen Längsträger (14) und die hinteren Längsträger (25) beide mit den U-förmigen Batterieboxen (22) verbunden sind;
ein erster Querträger (13), welcher fix mit vorderen Enden der zwei vorderen Längsträger (14) verbunden ist,
ein zweiter Querträger (15) und ein dritter Querträger (18), welche fix zwischen den zwei vorderen Längsträgern (14) an Stellen zwischen dem ersten Querträger (13) und den Batterieboxen (22) vorgesehen sind,
ein vierter Querträger (23) und ein fünfter Querträger (24), welche fix zwischen den zwei hinteren Längsträgern (25) verbunden sind;
zwei erste Seitenquerträger (19), welche sich von jeweils einer Seite von jedem der zwei vorderen Längsträger (14) erstrecken,
zwei zweite Seitenquerträger (22a), welche sich jeweils von einer Seite von jeder der zwei Batterieboxen (22) erstrecken,
zwei dritte Seitenquerträger (25a), welche sich jeweils von einer Seite von jedem der der zwei hinteren Längsträger (25) erstrecken, und
wobei die zwei ersten Seitenquerträger (19), die zwei zweiten Seitenquerträger (22a) und die zwei dritten Seitenquerträger (25a) fix mit einem entsprechenden Türschwellenträger (21) an einem Bodenteil der Seitenpanel-Baugruppe (3) verbunden sind; und **dadurch gekennzeichnet, dass**
jeder der zwei hinteren Längsträger (25) ein gestufter Träger ist und mit einem Auflagesitz (25b) versehen ist, der mit einer hinteren Achsen-Längsantriebsstange verbunden ist, wobei die hintere Bodenplatte (26), die eine gestufte Struktur hat, fix an den zwei hinteren Längsträgern (25) vorgesehen ist, wobei eine Kavität zur Platzierung einer Kontrollbox durch die hintere Bodenplatte (26) geformt wird und eine Stahlplatte an einem Basisteil der Batterieboxen (22) vorgesehen ist, und wobei ein zentraler Träger (27) zwischen den Batterieboxen (22) und einem vorderen Panel (9) der vorderen Motorraum-Baugruppe (1) vorgesehen ist.

2. Der integrale Körper für ein ultra-mini reines Elektrofahrzeug mit niedriger Geschwindigkeit gemäss Anspruch 1, wobei die vordere Motorraum-Baugruppe (1) zwei symmetrisch angeordnete vordere Säulen (5) aufweist, wobei jede der zwei vorderen Säulen (5) fix an jedem der zwei vorderen Längsträger (14) der Untergestell-Baugruppe (2) vorgesehen ist, wobei ein oberes Ende von jeder der zwei vorderen Säulen (5) mit einem vorderen Motorraum-Stützträger (6) verbunden ist, welcher eine eine gebogene Form hat, wobei das andere Ende des vorderen Motorraum-Stützträgers (6) fix mit einem unteren Windschutzscheiben-Querträger (10) verbunden ist, wobei der untere Windschutzscheiben-Querträger (10) zwischen zwei unteren A-Säulen (32) der Seitenpanel-Baugruppe (3) vorgesehen ist, wobei ein vorderes Panel (9) zwischen dem unteren Windschutzscheiben-Querträger (10) und der Untergestell-Baugruppe (2) vorgesehen ist, wobei ein Kotflügel (7) zwischen dem vorderen Panel (9) und jeder der zwei vorderen Säulen (5) vorgesehen ist, und wobei von den zwei vorderen Säulen (5), dem vorderen Motorraum-Stützträger (6), dem unteren Windschutzscheiben-Querträger (10), dem vorderen Panel (9) und dem Kotflügel (7) eine Kavität zur Platzierung von Batterieboxen geformt wird.

3. Der integrale Körper für ein ultra-mini reines Elektrofahrzeug mit niedriger Geschwindigkeit gemäss Anspruch 2, wobei eine vordere Haubenverriegelungshalterung (12) zum Fixieren einer vorderen Haube zwischen den zwei vorderen Säulen (5) vorgesehen ist, wobei ein seitlicher Frontstossdämpfersitzträger (11) zwischen dem Kotflügel (7) und dem vorderen Panel (9) vorgesehen ist und fix mit einem Frontstossdämpfersitz (8) versehen ist.

4. Der integrale Körper für ein ultra-mini reines Elektrofahrzeug mit niedriger Geschwindigkeit gemäss Anspruch 1, wobei das innere Seitenpanel (29) an einer inneren Seite des äusseren Seitenpanels (28) vorgesehen ist und mit Lichtlöchern und Verstärkungsrippen versehen ist.

5. Der integrale Körper für ein ultra-mini reines Elektrofahrzeug mit niedriger Geschwindigkeit gemäss Anspruch 1, wobei die Dach-Baugruppe (4) eine Dachabdeckung (30) aufweist, welche via Dachstützträger (31) fix mit einem oberen Teil der Seitenpanel-Baugruppe (3) verbunden ist.

## Revendications

1. Une carrosserie intégrale pour un véhicule électrique pur ultra miniature à basse vitesse, comprenant :
un ensemble de châssis inférieur (2),
un ensemble de compartiment moteur avant (1) étant prévu de manière fixe sur une extrémité avant de l'ensemble de châssis inférieur (2),
un ensemble de panneau latéral (3) comprenant un panneau latéral extérieur (28) et un panneau latéral intérieur (29) et étant relié de manière fixe à une extrémité arrière de l'ensemble de compartiment moteur avant (1), et
un ensemble de toit (4) étant relié de manière fixe à une portion supérieure de l'ensemble de panneau latéral (3)
dans laquelle l'ensemble de châssis inférieur (2) comprend :
deux longerons avant parallèles (14),
deux longerons arrière parallèles (25),
et une plaque inférieure comprenant une plaque inférieure avant (20) et une plaque inférieure arrière (26) et étant prévues respectivement sur les deux longerons avant (14) et les deux longerons arrière (25) ;
des coffres pour batterie (22) en forme de U étant prévus entre les deux longerons avant (14) et les deux longerons arrière (25),
une première poutre transversale (13) étant reliée de manière fixe aux extrémités avant des deux longerons avant (14),
une deuxième poutre transversale (15) et une troisième poutre transversale (18) étant prévues de manière fixe entre les deux longerons avant (14) en des positions entre la première poutre transversale (13) et les boîtes pour batterie (22),
une quatrième poutre transversale (23) et une cinquième poutre transversale (24) étant prévues de manière fixe entre les deux longerons arrière (25) ;
deux premières poutres transversales latérales (19) étant prolongées à partir d'un côté de chacune des deux longerons avant (14),
deux deuxièmes poutres transversales latérales (22a) étant prolongées à partir d'un côté de chacune des coffres de batterie (22),
deux troisièmes poutres transversales latérales (25a) étant prolongées à partir d'un côté de chacune des deux longerons arrière (25), et
dans laquelle les deux premières poutres transversales latérales (19), les deux deuxièmes poutres transversales latérales (22a) et les deux troisièmes poutres transversales latérales (25a) sont reliées de manière fixe à une poutre de seuil de portière (21) sur une partie inférieure de l'ensemble de panneau latéral (3) ; et
**caractérisé en ce que**
chacun des deux longerons arrière (25) est une poutre étagée et est muni d'un siège de support (25b) relié à une tige de poussée longitudinale d'essieu arrière, la plaque inférieure arrière (26) ayant une structure étagée est prévue de manière fixe sur les deux longerons arrière (25), une cavité pour placer un boîtier de commande est formée par la plaque de fond arrière (26) et une plaque d'acier prévue sur une partie de base des coffres pour batterie (22), et une poutre centrale (27) est prévue entre les coffres pour batterie (22) et un panneau avant (9) de l'ensemble de compartiment moteur avant (1).

2. La carrosserie intégrale pour un véhicule électrique pur ultra-mini à basse vitesse selon la revendication 1, dans laquelle le compartiment moteur avant (1) comprend deux poutres avant (5) disposées symétriquement, chacune des deux poutres avant (5) étant prévue de manière fixe sur chacun des deux longerons avant (14) de l'ensemble de châssis inférieur (2), une extrémité avant de chacune des deux poutres avant (5) étant reliée à une poutre de support de compartiment moteur avant (6) ayant une structure en arc, l'autre extrémité de la poutre de support de compartiment moteur avant (6) étant reliée de manière fixe à une poutre transversale inférieure de pare-brise (10), la poutre transversale inférieure de pare-brise (10) étant prévue entre deux poutres inférieures de poutre A (32) de l'ensemble de panneau latéral (3), un panneau avant (9) étant prévu entre la poutre transversale inférieure de pare-brise (10) et l'ensemble de châssis inférieur (2), un garde-boue (7) étant prévu entre le panneau avant (9) et chacun des deux poutres avant (5), et une cavité pour placer des coffres pour batterie est formée par les deux poutres avant (5), la poutre de support du compartiment moteur avant (6), la poutre transversale inférieure de pare-brise (10), le panneau avant (9) et le garde-boue (7).

3. La carrosserie intégrale pour un véhicule électrique pur ultra-mini à basse vitesse selon la revendication 2, **caractérisée** en ce un support de verrouillage de capot avant (12) pour la fixation d'un capot avant est prévu entre les deux poutres avant (5), une poutre latérale (11) de siège d'amortisseur avant est prévue entre le garde-boue (7) et le panneau avant (9) et est pourvu de manière fixe avec un siège d'amortisseur avant (8).

4. La carrosserie intégrale pour un véhicule électrique pur ultra-mini à basse vitesse selon la revendication 1, dans laquelle le panneau latéral intérieur (29) et est prévu du côté intérieur du panneau latéral extérieur (28) et est doté de nervures de renforcement et de percées d'allègement.

5. La carrosserie intégrale pour un véhicule électrique pur ultra-mini à basse vitesse selon la revendication 1, dans laquelle l'ensemble de toit (4) comprend un capot (30) étant relié de manière fixe à une partie supérieure de l'ensemble de panneau latéral (3) à travers de poutres de support de capot (31).
